# EUROPEAN PATENT SPECIFICATION

(11) **EP 2 780 487 B1**
(45) Date of publication and mention of the grant of the patent: **04.01.2017**
(21) Application number: 12850028.7
(22) Date of filing: 14.11.2012
(51) Int. Cl.: C22C 37/00, C22C 37/10, C22C 37/06, C21D 5/00, C22C 33/08, C21D 9/00, F01C 21/08, F04C 18/356

(54) **ALLOY CAST IRON AND MANUFACTURING METHOD OF ROLLING PISTON USING THE SAME**
LEGIERUNGSGUSSEISEN UND HERSTELLUNGSVERFAHREN EINES ROLLKOLBENS DAMIT
ALLIAGE DE FONTE ET PROCÉDÉ DE FABRICATION D'UN PISTON ROULANT À L'AIDE DE CELUI-CI

(30) Priority: 14.11.2011 KR 20110118384; 09.02.2012 KR 20120013480
(43) Date of publication of application: 24.09.2014
(73) Proprietor: LG Electronics Inc., Yeongdeungpo-gu Seoul 150-721 (KR)
(72) Inventor: PARK, Jaebong, Changwon-si Gyeongsangnam-do 642-713 (KR)
(74) Representative: Vossius & Partner Patentanwälte Rechtsanwälte mbB
(86) International application number: PCT/KR2012/009576
(87) International publication number: WO 2013/073821

(56) References cited:
- EP-A1- 1 688 506
- WO-A1-94/10354
- JP-A- S 569 686
- JP-A- H1 081 934
- JP-A- S6 254 056
- JP-A- H06 207 240
- JP-A- H08 232 038
- JP-A- H09 209 072
- JP-A- S57 194 241
- JP-A- 2001 107 173
- JP-A- 2001 123 241
- JP-A- 2006 206 986
- RU-C1- 2 409 689
- US-A- 5 370 170
- US-A- 5 972 128
- US-A- 5 985 052
- US-A- 5 985 052

## Description

The present invention relates to alloy cast iron rolling piston for a rotary compressor and a method of manufacturing said rolling piston for a rotary compressor.

Generally, a compressor includes a driving motor for generating a driving force at an inner space of a shell, and a compression unit coupled to the driving motor and compressing a refrigerant. The compressor may be categorized into various types according to a refrigerant compression method. For instance, in case of a rotary compressor, the compression unit includes a cylinder for forming a compression space, a vane for dividing the compression space of the cylinder into a suction chamber and a discharge chamber, a plurality of bearing members for supporting the vane and forming the compression space together with the cylinder, and a rolling piston rotatably mounted in the cylinder.

The vane is inserted into a vane slot of the cylinder, and the compression space is divided into two parts as the end of the vane is fixed to the outer circumference of the rolling piston. During a compression process, the vane continuously slides in the vane slot. Here, the vane should have a high strength and a high abrasion resistance, because it should continuously contact a refrigerant of high temperature and high pressure, and maintain an attached state to the rolling piston and the bearing for prevention of refrigerant leakage.

Like the vane, the rolling piston is also required to have a high abrasion resistance, because it performs a sliding motion by linearly-contacting the vane while contacting the inner circumferential surface of the cylinder.

EP 1 688 506 A1 discloses a valve guide of alloyed gray cast iron.

JP 2006-206986 discloses a cast iron having excellent corrosion resistance and wear resistance.

JP 10-081934 describes high temperature parts sliding guide material capable of withstanding high temperature without deterioration machinability.

JP 57-194241 describes cast iron having enhanced wear resistance by adding specified amounts of Cu and Ca to molten cast iron containing P to increase the number of eutectic cells during solidification and to distribute steadite finely and uniformly.

However, the conventional rolling piston has the following problems. Firstly, as the conventional rolling piston is formed of gray cast iron having the hardness (HRC) of 30-40, it may abrade when the compressor is driven for a long time. This may cause leakage of a refrigerant. Especially, a new refrigerant such as HFC which replaces CFC of which usage has been stopped due to the destruction of the ozone layer, has a lower lubrication function than the CFC. Further, as the compressor has a higher driving speed or a higher driving pressure by an inverter for reducing energy consumption, the rolling piston is required to have a higher abrasion resistance than the conventional one.

In order to enhance the abrasion resistance, the conventional rolling piston is manufactured by alloy cast iron obtained by adding various types of elements to gray cast iron. More specifically, Mo, Ni, Cr, etc. are added to gray cast iron to enhance the abrasion resistance or hardness. However, the high cost of Mo, Ni, Cr, etc. corresponding to 40% the material cost of the alloy cast iron, may cause the manufacturing costs to be increased.

### Solution to Problem

Therefore, an object of the present invention is to provide alloy cast iron for manufacturing a rolling piston with lower costs than in the conventional art.

Another object of the present invention is to provide a method of manufacturing a rolling piston with lower costs than in the conventional art.

To achieve these and other advantages and in accordance with the purpose of the present invention, as embodied and broadly described herein, there is provided alloy cast iron rolling piston for a rotary compressor according to claim 1 consisting of, by weight, 3.0 ~ 3.5% carbon (C), 2.2 ~ 2.4% silicon (Si), 0.5 ~ 1.0% manganese (Mn), 0.1 ~ 0.3% phosphorus (P), 0.06 ~ 0.08% sulfur (S), 0.7 ~ 1.0% chromium(Cr), 0.6 ~ 1.0% copper (Cu), and a balance formed of Fe and inevitable
impurities, wherein 3 ~ 8% steadite structure is formed by volume.

The alloy cast iron rolling piston undergoes a thermal processing including quenching and tempering. The quenching is performed by maintaining the alloy cast iron rolling piston at
900±10°C for 90 ~ 150 minutes, then by oil-cooling the alloy cast iron rolling piston to 50 ∼ 90°C,
and then by maintaining the alloy cast iron at 50 - 90°C for 5 - 7 hours.

The tempering may be performed by maintaining the alloy cast iron rolling piston at 250±10°C for
150 ∼ 210 minutes, and then by cooling the alloy cast iron rolling piston to room temperature in air.

The tempered alloy cast iron rolling piston has a Rockwell hardness of 45~55.

To achieve these and other advantages and in accordance with the purpose of the present invention, as embodied and broadly described herein, there is also provided a method of manufacturing a rolling piston for a rotary compressor according to claim 2, the method
comprising: a melting step of preparing a molten metal consisting of 3.0 ~ 3.5% carbon (C), 2.2 ~ 2.4% silicon (Si), 0.5 ~ 1.0% manganese (Mn), 0.1 ~ 0.3% phosphorus (P), 0.06 ~ 0.08% sulfur (S), 0.7 ~ 1.0% chromium (Cr), 0.6 ~ 1.0% copper (Cu), and a balance formed of Fe and inevitable impurities; a casting step of pouring the molten metal in a mold and cooling thereby preparing a semi-product in which 3 ~ 8% steadite structure is formed by volume; a grinding step of grinding the cooled semi-product to a prescribed shape; and a thermal-processing step of thermally-processing the ground semi-product for the hardness of 45~55.

The thermal-processing step includes quenching and tempering. The quenching is performed by maintaining the alloy cast iron at 900±10°C for 90 ~ 150 minutes, then by oil-cooling the alloy cast iron to 50 ~ 90°C, and then by maintaining the alloy cast iron at 50 ~ 90°C for 5 ~ 7 hours. And, the tempering is performed
by maintaining the alloy cast iron at 250±10°C for 150 - 210 minutes, and then by cooling the alloy cast iron to room temperature in air.

### Advantageous Effects of Invention

The present invention can have the following advantages.

The rolling piston of the present invention can be cheaply manufactured by minimizing the amount of expensive Cr, or by excluding Ni and Mo, and can have a sufficient mechanical property.

Especially, as an appropriate amount of Cu is added to the cast iron, a cutting function can be enhanced, and the tensile strength and the abrasion resistance can be more improved.

### Brief Description of Drawings

FIG. 1 is a sectional view of a rotary compressor having a rolling piston formed of alloy cast iron according to an embodiment of the present invention,
FIG. 2 is a cross-sectional view of a compression part of the rotary compressor of FIG. 1;
FIGS. 3A to 3C are photos showing the matrix structure of alloy cast iron according to a first embodiment of the present invention;
FIGS. 4A to 4C are photos showing the matrix structure of alloy cast iron according to a second embodiment of the present invention;
FIGS. 5A to 5C are photos showing the matrix structure of alloy cast iron according to a third embodiment of the present invention;
FIGS. 6A to 6C are photos showing the matrix structure of alloy cast iron according to a fourth embodiment of the present invention;
FIGS. 7A to 7C are photos showing the matrix structure of alloy cast iron according to a fifth embodiment of the present invention; and
FIGS. 8A to 8C are photos showing the matrix structure of alloy cast iron according to a six embodiment of the present invention.

### Mode for the Invention

Reference will now be made in detail to the preferred embodiments of the present invention, examples of which are illustrated in the accompanying drawings. It is intended that the present invention cover modifications and variations of this invention provided they come within the scope of the appended claims and their equivalents.

Description will now be given in detail of a drain device and a refrigerator having the same according to an embodiment, with reference to the accompanying drawings.

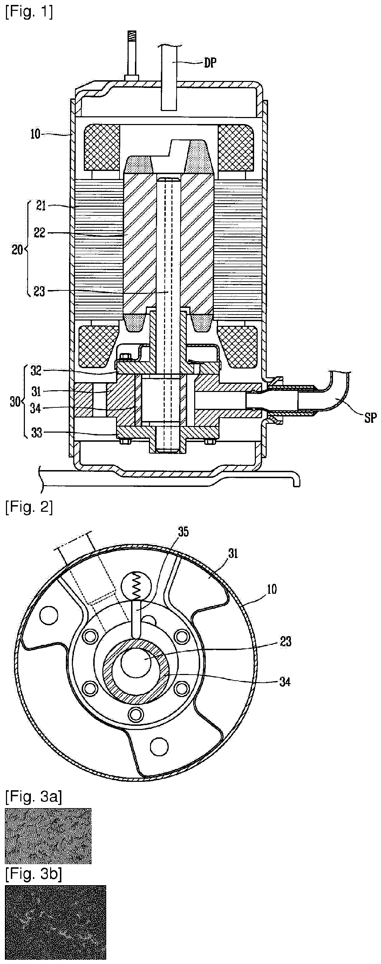

Hereinafter, preferred embodiments of alloy cast iron rolling piston according to the present
invention will be explained in more detail. Firstly, a rotary compressor having a rolling piston formed of the alloy cast iron will be schematically explained with reference to FIGS. 1 and 2.

As shown in FIGS. 1 and 2, the rotary compressor comprises a motor part 20 and a compression part 30 installed in a hermetic container 10. The compression part 30 includes a cylinder 31, an upper bearing 32, a lower bearing 33, a rolling piston 34, a vane 35, etc. Reference numeral 21 denotes a stator, 22 denotes a rotor, 23 denotes a rotation shaft, SP denotes a suction pipe, and DP denotes a discharge pipe.

The rolling piston 34 additionally includes chromium (Cr) and copper (Cu), as well as elements of general gray cast iron formed of (C), silicon (Si), manganese (Mn), phosphorus (P), sulfur (S) and iron (Fe), so that the hardness (HRC) thereof can be about within the range of 45~55. Hereinafter, each element will be explained.

### (1) Carbon (C): 3.0 ~ 3.5%

Carbon in cast iron exists in the form of graphite (black lead), or carbide expressed as Fe3C. Most of carbon exists in the form of carbide. Generally, a small amount of carbon is implemented in the form of carbide, which causes a difficulty in implementing a flake graphite structure. Therefore, the amount of carbon is set to be equal to or more than 3.0% for a uniform flake graphite structure. As the amount of carbon is large, a solidification point is lowered. This is advantageous in improving castability, but causes high brittleness and badly influences on the tensile strength due to an excessive precipitation amount of graphite. That is, when carbon saturation (Sc) is about within 0.8~0.9, the tensile strength is the greatest. Therefore, a great tensile strength can be obtained by setting the maximum amount of carbon (C) as 3.5%.

### (2) Silicon (Si): 2.2 ~ 2.4%

Silicon is an element for accelerating graphitization, which serves to precipitate carbide as black lead in a decomposition manner. That is, addition of silicon provides the same effect as increase of the amount of carbon. Further, silicon helps a fine graphite structure which exists in cast iron, grow as a flake graphite structure. The grown flake graphite structure is generated as spheroidal graphite by magnesium or a spheroidizing agent, etc. However, silicon also serves to enhance the tensile strength by enhancing the matrix structure of cast iron when being added to the cast iron in great quantities. That is, if Si/C is increased, the amount of graphite is decreased. And, the tensile strength is enhanced as the matrix structure is reinforced by high silicon, which is more clearly shown when an inoculating agent is put into molten metal. From this perspective view, the amount of silicon was determined within the range of 2.2 ~ 2.4%.

### (3) Manganese (Mn): 0.5 ~ 1.0%

Manganese is an element for acceleration into white cast iron which prevents graphitization of carbon, which serves to stabilize combined carbon (i.e., cementite). Further, the manganese is effective when implementing a pearlite type matrix structure of cast iron, because it prevents precipitation of ferrite and implements fine pearlite. Especially, manganese is combined with sulfur included in cast iron, thereby forming mangan sulphide. The mangan sulphide floats to the surface of molten metal, and is removed as slag or solidified. Then, the mangan sulphide remains in cast iron as non-metallic inclusion, thereby preventing generation of iron sulphide. That is, the manganese also serves to neutralize the damage of sulfur. The amount of manganese is determined within the range of 0.5 ~ 1.0%, for acceleration into pearlite type cast ion and for removal of sulfur.

### (4) Chromium (Cr): 0.7 ~ 1.0%

Chromium is an element which prevents graphitization, and causes white iron when being added to the alloy cast iron in great quantities. And, the chromium lowers machinability by excessively enhancing the hardness. On the other hand, the chromium stabilizes carbide, and enhances a heat resistance. Accordingly, 0.7 - 1.0% chromium was added to the cast iron to enhance mechanical performance and the heat resistance. Further, the chromium enhances a quenching property, and stabilizes pearlite cast iron during eutectic transformation.

Especially since the chromium has a similar characteristic to molybdenum in density, etc., it can be utilized as a substituting agent of molybdenum. Accordingly, the material costs can be reduced while a similar physical property can be obtained, by replacing expensive molybdenum by cheap chromium.

### (5) Copper (Cu): 0.6 ~ 1.0%

Copper is an element capable of making graphite have a thick and short shape, capable of reducing D and E type over-cooled graphite, and capable of accelerating A-type flake graphite. Further, the copper enhances the uniformity of the structure by implementing fine pearlite, by accelerating formation of pearlites and shortening a distance between the pearlites, and reduces a quality difference of a product. The copper enhances castability by increasing fluidity of molten metal, and reduces a remaining stress.

The copper makes the structure compact, and enhances the tensile strength, the hardness, etc. of cast iron. The copper enhances a quenching effect, and improves a cutting function. Such effects are significantly shown when the cast iron contains about 3.0% carbon. When chromium is together added to the cast iron, more excellent effects can be obtained. That is, the copper's characteristic to accelerate graphitization and the chromium's stabilizing characteristic are neutralized, which increases the tensile strength and the hardness, and allows a thin casting to be more effectively inoculated.

### (6) Phosphorus (P): 0.1 ~ 0.3%

Phosphorus forms a compound of Fe3P, and exists as tertiary eutectic steadite together with ferrite and cementite (iron carbide). The Fe3P is easily over-cooled, and causes rag stone in a mold. Therefore, as the amount of phosphorus is increased, brittleness is increased and the tensile strength is drastically decreased. Especially, if the amount of phosphorus exceeds 0.3%, Fe3P is distributed in the form of a continuous net. This may cause the intercrystalline structure to be non-uniform, and degrades a mechanical function. Accordingly, the amount of phosphorus is set as 0.1 ~ 0.3%, such that Fe3P is distributed in the form of a discontinuous net or island. Under this configuration, a mechanical performance is prevented from degrading.

### (7) Sulfur (S): 0.06 ~ 0.08%

As sulfur is added to the alloy cast iron in great quantities, fluidity of molten metal is lowered, a shrink amount is increased, and a shrink hole or a crack may occur. Therefore, it is preferable for the alloy cast iron to contain a small amount of sulfur. However, when the amount of sulfur is 0.1% or less than, such problems are not caused. Therefore, the amount of sulfur is controlled to be within the range of 0.06 ~ 0.08%.

The aforementioned elements are mixed with one another to thereby produce alloy cast iron. The alloy cast iron is used to manufacture a rolling piston of a compressor. Hereinafter, will be explained the processes of manufacturing a rolling piston for a compressor, the rolling piston formed of the alloy cast iron.

### (1) Smelting

The aforementioned elements are selected in an appropriate ratio to thereby produce a raw material. Then, the produced raw material is put into a middle frequency induction furnace, and is heated so as to be completely melted. Then, the raw material is smelted.

### (2) Inoculation

An inoculating agent is introduced into the molten metal smelted in the smelting step. The inoculation serves to accelerate graphitization by generating graphite nuclei as much as possible, and to increase the strength by uniformly distributing graphite. As an inoculation material, a barium-silicon alloy is used (FeSi72Ba2). Here, the added
amount of the FeSi72Ba2 is 0.4 ~ 1.0% of the mass of the molten metal.

### (3) Casting

The molten metal inoculated in the inoculation step is put into a pre-manufactured casting so as to have a desired cavity. Here, the casting is performed by a shell mold process or an investment mold process using resin-coated sand. The cooled rolling piston semi-product contains graphite and carbide having a flake structure, and the amount of the steadite is set as 3~8% by volume. The steadite has a very hard structure, which is advantageous to enhance the hardness and the abrasion resistance. However, if an excessive amount of the steadite is contained in the alloy cast iron, the machinability is greatly lowered and the brittleness is increased. Therefore, the content of each element is controlled so that the volume ratio of the steadite can be within the above range.

### (4) Grinding

The rolling piston semi-product obtained in the casting step is ground to thereby be processed in a desired form.

### (5) Thermal Processing

A thermal processing includes quenching and tempering.

-Quenching: The ground rolling piston semi-product is maintained at 900±10°C for 90 ~ 150 minutes, by using an electric resistance furnace capable of controlling the temperature of air. Then, the ground rolling piston semi-product is oil-cooled to 50 ∼ 90°C, and then is maintained at 50 ∼ 90°C for 5 ∼ 7 hours.

### -Tempering

The semi-product having been completely quenched, is maintained at 250±10°C for 150 ∼ 210 minutes, and then is cooled to room temperature in air.

When compared to a case where molybdenum and nickel are contained in the alloy cast iron, steadite is not uniformly distributed in the alloy cast iron of the present invention. In order to uniformly distribute steadite, the temperature for quenching and tempering is increased.

### (6) Fine grinding and polishing

The rolling piston quenched and tempered in the thermal processing undergoes fine grinding and polishing processes, thereby having a final shape and a desired surface quality.

### (7) Sulphurizing

The rolling piston obtained in the fine grinding and polishing processes undergoes a sulphurizing process, thereby having a sulphurized layer on the surface thereof in a thickness of 0.005 ∼ 0.015mm. The sulphurized layer serves to enhance the lubricating property and the abrasion resistance of the rolling piston, together with flake graphite which exists in the rolling piston.

The above elements were manufactured as 6 samples, by having different contents within the aforementioned range, which is shown in the following table 1.

Table 1

**[Table 1]**

| No. | C | Si | Mn | P | S | Cr | Cu |
|---|---|---|---|---|---|---|---|
| 1 | 3.0 | 2.25 | 0.5 | 0.1 | 0.06 | 0.7 | 0.6 |
| 2 | 3.1 | 2.4 | 0.6 | 0.15 | 0.06 | 0.7 | 0.7 |
| 3 | 3.2 | 2.3 | 0.7 | 0.2 | 0.07 | 0.8 | 0.8 |
| 4 | 3.3 | 2.4 | 0.8 | 0.25 | 0.07 | 0.8 | 0.9 |
| 5 | 3.4 | 2.2 | 0.9 | 0.25 | 0.08 | 0.9 | 0.9 |
| 6 | 3.5 | 2.35 | 1.0 | 0.3 | 0.08 | 1.0 | 1.0 |

In the table 1, each content is expressed by weight (%). The physical property measured with respect to each sample manufactured to include such elements will be hereinafter explained.

### EMBODIMENT 1

The hardness of the rolling piston after casting was high as 98HRB. However, the hardness after the thermal processing was 49HRC and the tensile strength was 293MPa. Referring to FIG. 3A, graphite precipitated in the structure of the Embodiment 1 is about 85% A-type graphite in which flake graphite is smoothly curved and is uniformly distributed. Generally, A-type flake graphite is the most excellent among A-E type graphite. Therefore, it can be seen that the rolling piston has an excellent physical property in the Embodiment 1.

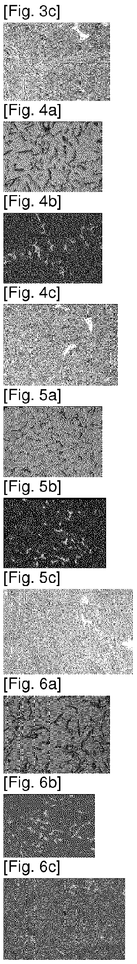

Referring to FIG. 3B, it can be seen that the content of steadite is about 3%. Referring to FIG. 3C, it can be seen that the matrix structure of the Embodiment 1 is Martensite.

From the results, it can be seen that the rolling piston of the Embodiment 1 has the hardness and abrasion-resistance more excellent than those of the conventional rolling piston formed of alloy cast iron and having the hardness of 30~40. Further, the rolling piston of the present invention has a similar function to a rolling piston containing Ni, Mo and Cr and having the hardness of about 46~56.

### EMBODIMENT 2

The hardness after casting was high as 99HRB. However, the hardness after the thermal processing was 50HRC and the tensile strength was 298MPa. Referring to FIG. 4A, graphite precipitated in the structure of the Embodiment 2 is about 90% A-type graphite in which flake graphite is smoothly curved and is uniformly distributed. Therefore, it can be seen that the rolling piston has also an excellent physical property in the Embodiment 2.

Referring to FIG. 4B, it can be seen that the content of steadite is about 3.5%. Referring to FIG. 4C, it can be seen that the matrix structure of the Embodiment 2 is Martensite.

It can be also seen that the rolling piston of the Embodiment 2 has the hardness and abrasion-resistance more excellent than those of the conventional rolling piston formed of alloy cast iron. Further, the rolling piston of the present invention has a similar function to a rolling piston containing Ni, Mo and Cr.

### EMBODIMENT 3

The hardness after casting was high as 100HRB. However, the hardness after the thermal processing was 51HRC and the tensile strength was 300MPa. Referring to FIG. 5A, graphite precipitated in the structure of the Embodiment 3 is about 95% A-type graphite in which flake graphite is smoothly curved and is uniformly distributed. Therefore, it can be seen that the rolling piston has also an excellent physical property in the Embodiment 3.

Referring to FIG. 5B, it can be seen that the content of steadite is about 4%. Referring to FIG. 5C, it can be seen that the matrix structure of the Embodiment 3 is Martensite.

It can be also seen that the rolling piston of the Embodiment 3 has the hardness and abrasion-resistance more excellent than those of the conventional rolling piston formed of alloy cast iron. Further, the rolling piston of the present invention has a similar function to a rolling piston containing Ni, Mo and Cr.

### EMBODIMENT 4

The hardness after casting was high as 101HRB. However, the hardness after the thermal processing was 52HRC and the tensile strength was 305MPa. Referring to FIG. 6A, graphite precipitated in the structure of the Embodiment 4 is about 85% A-type graphite in which flake graphite is smoothly curved and is uniformly distributed. Therefore, it can be seen that the rolling piston has also an excellent physical property in the Embodiment 4.

Referring to FIG. 6B, it can be seen that the content of steadite is about 4.5%. Referring to FIG. 6C, it can be seen that the matrix structure of the Embodiment 4 is Martensite.

It can be also seen that the rolling piston of the Embodiment 4 has the hardness and abrasion-resistance more excellent than those of the conventional rolling piston formed of alloy cast iron. Further, the rolling piston of the present invention has a similar function to a rolling piston containing Ni, Mo and Cr.

### EMBODIMENT 5

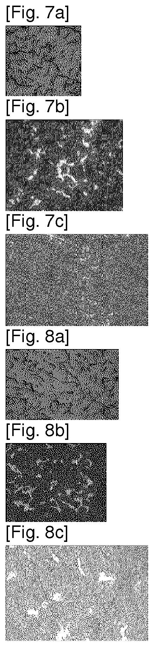

The hardness after casting was high as 102HRB. However, the hardness after the thermal processing was 52HRC and the tensile strength was 310MPa. Referring to FIG. 7A, graphite precipitated in the structure of the Embodiment 5 is about 90% A-type graphite in which flake graphite is smoothly curved and is uniformly distributed. Therefore, it can be seen that the rolling piston has also an excellent physical property in the Embodiment 5.

Referring to FIG. 7B, it can be seen that the content of steadite is about 5%. Referring to FIG. 7C, it can be seen that the matrix structure of the Embodiment 5 is Martensite.

It can be also seen that the rolling piston of the Embodiment 5 has the hardness and abrasion-resistance more excellent than those of the conventional rolling piston formed of alloy cast iron. Further, the rolling piston of the present invention has a similar function to a rolling piston containing Ni, Mo and Cr.

### EMBODIMENT 6

The hardness after casting was high as 103HRB. However, the hardness after the thermal processing was 53HRC and the tensile strength was 308MPa. Referring to FIG. 8A, graphite precipitated in the structure of the Embodiment 6 is about 95% A-type graphite in which flake graphite is smoothly curved and is uniformly distributed. Therefore, it can be seen that the rolling piston has also an excellent physical property in the Embodiment 6.

Referring to FIG. 8B, it can be seen that the content of steadite is about 6%. Referring to FIG. 8C, it can be seen that the matrix structure of the Embodiment 6 is Martensite.

It can be also seen that the rolling piston of the Embodiment 6 has the hardness and abrasion-resistance more excellent than those of the conventional rolling piston formed of alloy cast iron. Further, the rolling piston of the present invention has a similar function to a rolling piston containing Ni, Mo and Cr.

The above results are shown in the following table 2.

Table 2

**[Table 2]**

| No. | 1 | 2 | 3 | 4 | 5 | 6 |
|---|---|---|---|---|---|---|
| Hardness after casting (HRB) | 98 | 99 | 100 | 101 | 102 | 103 |
| Hardness after thermal processing (HRC) | 49 | 50 | 51 | 52 | 52 | 53 |
| Tensile Strength(Mpa) | 293 | 298 | 300 | 305 | 310 | 308 |
| Matrix Structure | Martensi te | Martensit e | Martensit e | Martensit e | Martensit e | Martensit e |
| Content of Steadite (%) | 3 | 3.5 | 4 | 4.5 | 5 | 6 |
| Type of Graphite (A-type) (%) | 85 | 90 | 95 | 85 | 90 | 95 |

As aforementioned, the rolling piston according to each embodiment has the hardness and abrasion resistance more excellent than those of the conventional rolling piston formed of alloy cast iron, and has an enhanced tensile strength. Further, the rolling piston according to each embodiment has a similar function to a rolling piston containing expensive Ni, Mo and Cr. Therefore, the rolling piston of the present invention can be cheaply manufactured.

## Claims

1. An alloy cast iron rolling piston for a rotary compressor consisting of, by weight:
3.0 ~ 3.5 % carbon (C);
2.2 ~ 2.4% silicon (Si);
0.5 ∼ 1.0% manganese (Mn);
0.1 ~ 0.3% phosphorus (P);
0.06 ~ 0.08% sulfur (S);
0.7 ~ 1.0% chromium (Cr);
0.6 ~ 1.0% copper (Cu); and
Fe balance and inevitable impurities,
wherein the alloy cast iron rolling piston has martensite matrix structure and 3~8vol% steadite structure
wherein a graphite precipitated in the martensite matrix structure is 85% or more of
A-type flake graphite, and
wherein the alloy cast iron rolling piston has a Rockwell hardness of 45~55 HRC.

2. A method of manufacturing a rolling piston for a rotary compressor according to claim 1, the method
comprising:
a melting step of preparing a molten metal consisting of, by weight, 3.0 ~ 3.5% carbon (C), 2.2 ~ 2.4% silicon (Si), 0.5 ~ 1.0% manganese (Mn), 0.1 ~ 0.3% phosphorus (P), 0.06 ~ 0.08% sulfur (S), 0.7 ~ 1.0% chromium (Cr), 0.6 ~ 1.0% copper (Cu), and Fe balance
and inevitable impurities;
a casting step of pouring the molten metal in a mold and cooling thereby preparing a semi-product in which 3~8vol% steadite structure is formed;
a grinding step of grinding the cooled semi-product to a prescribed shape;
a thermal-processing step of thermally-processing the ground semi-product;
a fine grinding and polishing step; and
an optional sulphurizing step of forming a sulphurized layer having a thickness 0.005-0.015 mm on the surface of the rolling piston;
wherein the thermal-processing step includes quenching and tempering,
wherein the quenching is performed by maintaining the alloy cast iron at 900±10°C for 90 ∼ 150 minutes, then by oil-cooling the alloy cast iron to 50 ~ 90°C, and then by maintaining the alloy cast iron at 50 ∼ 90°C for 5 ~ 7 hours,
wherein the tempering is performed by maintaining the alloy cast iron at 250±10°C for 150 ~ 210 minutes, and then by cooling the alloy cast iron to room temperature in air.

## Patentansprüche

1. Rollkolben aus Legierungsgusseisen für einen Rotationsverdichter mit:
3,0~3,5 Gew.-% Kohlenstoff (C),
2,2~2,4 Gew.-% Silizium (Si),
0,5~1,0 Gew.% Mangan (Mn),
0,1∼0,3 Gew.-% Phosphor (P),
0,06~0,08 Gew.-% Schwefel (S),
0,7~1,0 Gew.-% Chrom (Cr),
0,6~1,0 Gew.-% Kupfer (Cu) und
einem Fe-Rest und unvermeidbaren Verunreinigungen,
wobei der Rollkolben aus Legierungsgusseisen eine Martensitmatrixstruktur und eine 3~8 Vol.-%ige Steaditstruktur aufweist,
wobei ein in der Martensitmatrixstruktur ausgefällter Graphit ein 85 % oder mehr prozentiger Flockengraphit des A-Typs ist und
wobei der Rollkolben aus Legierungsgusseisen eine Rockwellhärte von 45~55 HRC aufweist.

2. Verfahren zur Herstellung eines Rollkolbens für einen Rotationsverdichter nach Anspruch 1, das folgende Schritte aufweist:
Schmelzen zur Bereitstellung einer Metallschmelze mit 3,0~3,5 Gew.-% Kohlenstoff (C), 2,2~2,4 Gew.-% Silizium (Si), 0,5~1,0 Gew.-% Mangan (Mn), 0,1~0,3 Gew.-% Phosphor (P), 0,06~0,08 Gew.-% Schwefel (S), 0,7-1,0 Gew.% Chrom (Cr), 0,6~1,0 Gew.-% Kupfer (Cu) und einem Fe-Rest und unvermeidbaren Verunreinigungen;
Gießen, wobei die Metallschmelze in eine Gussform gegossen und abgekühlt wird, um so ein Halbfertigprodukt mit einer 3~8 Vol.-%igen Steaditstruktur zu fertigen, Schleifen, um das abgekühlte Halbfertigprodukt in eine bestimmte Form zu schleifen, Wärmebehandeln zum Wärmebehandeln des geschliffenen Halbfertigprodukts, Feinschleifen und Polieren und
optional Sulfurisieren zur Bildung einer sulfurisierten Schicht mit einer Dicke von 0,005-0,015 mm auf der Oberfläche des Rollkolbens,
wobei der Wärmebehandlungsschritt Abschrecken und Tempern umfasst,
wobei das Abschrecken dadurch durchgeführt wird, dass das Legierungsgusseisen 90~150 Minuten bei 900±10°C gehalten, anschließend auf 50~90° C ölgekühlt und schließlich 5 bis 7 Stunden bei 50∼90° C gehalten wird,
wobei das Tempern dadurch ausgeführt wird, dass das Legierungsgusseisen 150~210 Minuten bei 250±10° C gehalten und danach an der Luft auf Raumtemperatur abgekühlt wird.

## Revendications

1. Piston roulant en alliage de fonte pour un compresseur rotatif composé en poids de :
3,0 à 3,5 % de carbone (C) ;
2,2 à 2,4 % de silicium (Si) ;
0,5 à 1,0 % de manganèse (Mn) :
0,1 à 0,3 % de phosphore (P) ;
0,06 à 0,08 % de soufre (S) ;
0,7 à 1,0 % de chrome (Cr) ;
0,6 à 1,0 % de cuivre (Cu) ; et
le reste de Fe et impuretés inévitables,
dans lequel le piston roulant en alliage de fonte a une structure de matrice de martensite et 3 à 8 % en volume de structure de stéatite,
dans lequel un graphite précipité dans la structure de matrice de martensite est de 85 % ou plus de graphite en paillettes de type A et
dans lequel le piston roulant en alliage de fonte a une dureté de Rockwell de 45 à 55 HRC.

2. Procédé de fabrication d'un piston roulant pour un compresseur rotatif selon la revendication 1, le procédé comprenant :
une étape de fusion pour préparer un métal fondu composé en poids de 3,0 à 3,5 % de carbone (C), 2,2 à 2,4% en poids de silicium (Si), 0,5 à 1,0 % en poids de manganèse (Mn), 0,1 à 0,3 % en poids de phosphore (P), 0,06 à 0,08 % en poids de soufre (S), 0,7 à 1,0 % en poids de chrome (Cr), 0,6 à 1,0 % en poids de cuivre (Cu) et le reste de Fe et impuretés inévitables ;
une étape de moulage pour verser le métal fondu dans un moule et de refroidissement en préparant par là même un semi-produit, dans lequel 3 à 8 % en volume de structure de stéatite est formé ;
une étape de meulage pour meuler le semi-produit refroidi à une forme prescrite ;
une étape de traitement thermique pour traiter thermiquement le semi-produit meulé ;
une étape de meulage et de polissage fins ; et
une étape de sulfuration optionnelle pour former une couche sulfurée présentant une épaisseur de 0,005 à 0,015 mm sur la surface du piston roulant ;
dans lequel l'étape de traitement thermique comporte la trempe et le revenu,
dans lequel la trempe est réalisée par le maintien de l'alliage de fonte à 900 ± 10°C pendant 90 à 150 minutes, puis par le refroidissement à l'huile de l'alliage de fonte à 50 à 90°C et ensuite par le maintien de l'alliage de fonte à 50 à 90°C pendant 5 à 7 heures,
dans lequel le revenu est réalisé par le maintien de l'alliage de fonte à 250 ± 10°C pendant 150 à 210 minutes et ensuite par le refroidissement de l'alliage de fonte à température ambiante dans l'air.
